# FASCICULE DE BREVET EUROPEEN

(11) **EP 1 228 963 B1**
(45) Date de publication et mention de la délivrance du brevet: **23.07.2003**
(21) Numéro de dépôt: 02290257.1
(22) Date de dépôt: 04.02.2002
(51) Int. Cl.: B64D 11/06

(54) **Siege multipositions pour avion**
Mehrstellungsfluggastsitz
Multipositional airplane seat

(30) Priorité: 05.02.2001 FR 0101506
(43) Date de publication de la demande: 07.08.2002
(73) Titulaire: Société Industrielle et Commerciale de Matériel Aéronautique, F-36100 Issoudun (FR)
(72) Inventeur: Marechal, Robert, 75116 Paris (FR); Mercier, Guy, 36100 Neuvy-Pailloux (FR)
(74) Mandataire: Geismar, Thierry

(56) Documents cités:
- EP-A- 0 957 025
- EP-A- 0 980 826
- EP-A- 1 044 878
- US-A- 6 059 364

## Description

L'invention se rapporte à un siège pour avion pouvant adopter toutes les positions autorisées par un espace compris entre une coque fixe de séparation avant et une coque fixe de séparation arrière.

On connaît déjà des documents décrivant des sièges pouvant adopter plusieurs positions entre deux coques fixes de séparation, tels que les documents EP 1 043 225, EP1 044 878 et US 6 059 364, qui montre toutes les caractéristiques du préambule de la revendication indépendante.

Toutefois, dans ces documents, les mouvements du siège sont liés à une des coques de séparation, ce qui limite les degrés de liberté du siège. Notamment, ce dernier ne peut être écarté de la coque de séparation.

Le document EP 980 826 décrit un siège dont les mouvements sont indépendants de la coque de séparation. Toutefois, cette dernière est mobile, ce qui peut être gênant pour le passager assis derrière la coque de séparation.

L'objet de l'invention est de réaliser un siège s'étendant entre une coque fixe de séparation avant et une coque fixe de séparation arrière, pouvant adopter toutes les positions possibles dans l'espace ainsi défini.

A cet effet, le siège selon l'invention comprend une assise réglable en inclinaison, un dossier réglable en inclinaison, un repose jambes réglable en inclinaison à l'assise, une structure de support de l'assise et du dossier et une coque fixe de séparation disposée derrière le dossier du siège, ladite structure de support ou l'assise étant mobile en translation suivant une direction sensiblement perpendiculaire au plan dudit dossier en position verticale, ledit siège étant situé dans un espace compris entre une coque fixe de séparation avant et la coque fixe de séparation arrière, et ledit siège s'étendant à proximité de la coque fixe de séparation arrière en position droite de décollage et d'atterrissage dans laquelle l'assise est sensiblement horizontale, le dossier et le repose jambes étant sensiblement verticaux.

Ce siège est caractérisé en ce que les mouvements de chacun des éléments du siège sont indépendants les uns des autres et desdites coques fixes de séparation et en ce qu'il comprend des moyens de commande lui permettant d'adopter, entre ladite position droite de décollage et d'atterrissage du siège et une position allongée du siège, toutes les positions autorisées par l'espace compris entre ladite coque fixe de séparation avant et ladite coque fixe de séparation arrière.

D'autres particularités et avantages de l'invention apparaîtront encore dans la description ci-après.

Aux dessins annexés donnés à titre d'exemples non limitatifs :
- la figure 1 est une vue de côté du siège selon l'invention dans une position inclinée ;
- la figure 2 est une représentation schématique de côté du siège en position droite de décollage et d'atterrissage,
- la figure 3 est une représentation schématique de côté du siège en position droite à distance de la coque fixe de séparation arrière,
- la figure 4 est une représentation schématique de côté du siège dans la position représentée figure 1,
- la figure 5 est une représentation schématique de côté du siège dans une position sensiblement en forme de V,
- la figure 6 est une représentation schématique de côté du siège dans une position allongée inclinée,
- la figure 7 est une représentation schématique de côté du siège dans une position allongée complètement horizontale de longueur maximale,
- la figure 8 est une représentation schématique de côté du siège dans une position allongée complètement horizontale de longueur réduite ;
- la figure 9 est une vue de côté du siège suivant un autre mode de réalisation de l'invention ;
- la figure 10 est une représentation schématique de côté du siège dans la position représentée figure 9 ;
- la figure 11 est une vue en perspective des moyens d'articulation de l'assise et du repose jambes du siège représenté figure 9, la figure 11a est un agrandissement de la partie A de la figure 11 ;
- la figure 12 est une vue en perspective des moyens d'articulation de l'assise et du dossier du siège représenté figure 9, la figure 12a est un agrandissement de la partie B de la figure 12 ;
- la figure 13 est une vue en perspective d'un mode de réalisation de la coque fixe du siège selon l'invention.

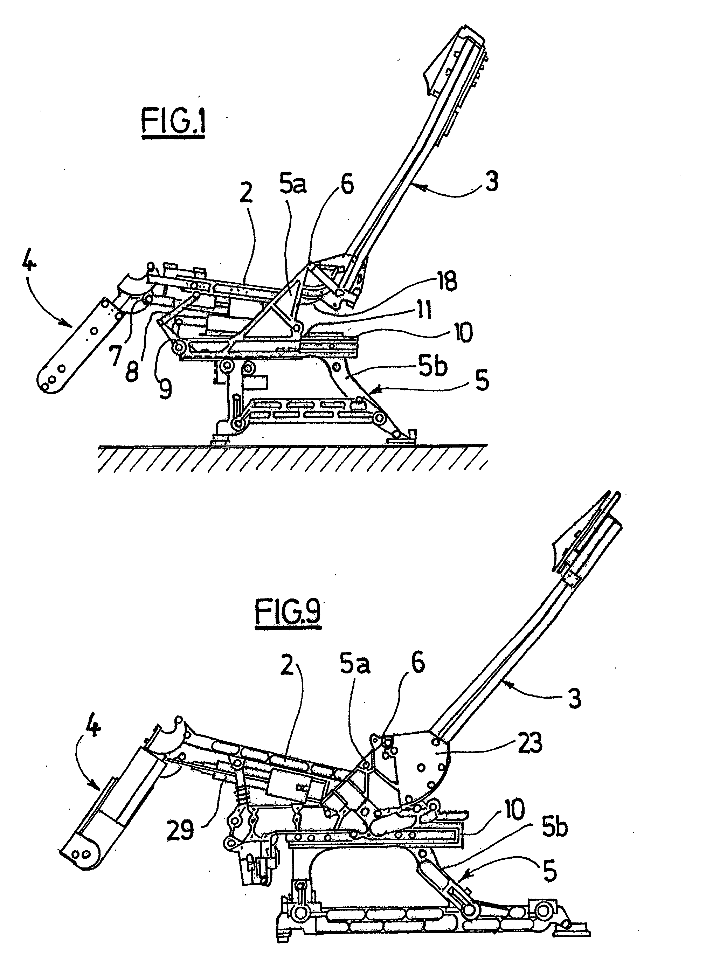

Un mode de réalisation du siège 1 selon l'invention est décrit en référence à la figure 1.

Le siège 1 comprend une assise 2, un dossier 3, un repose jambes 4, une structure de support 5 de l'assise 2 et du dossier 3 et une coque fixe de séparation 13 disposée derrière le dossier 3 du siège.

L'assise 2, le dossier 3 et le repose jambes 4 sont chacun réglables en inclinaison indépendamment les uns des autres.

L'assise 2 est fixée à rotation sur le dossier 3 autour d'un axe de rotation 18. Cet axe 18 est disposé sur la partie inférieure du dossier.

Le repose jambes 4 est réglable en inclinaison par rapport à l'assise 2 par rotation autour d'un axe 7.

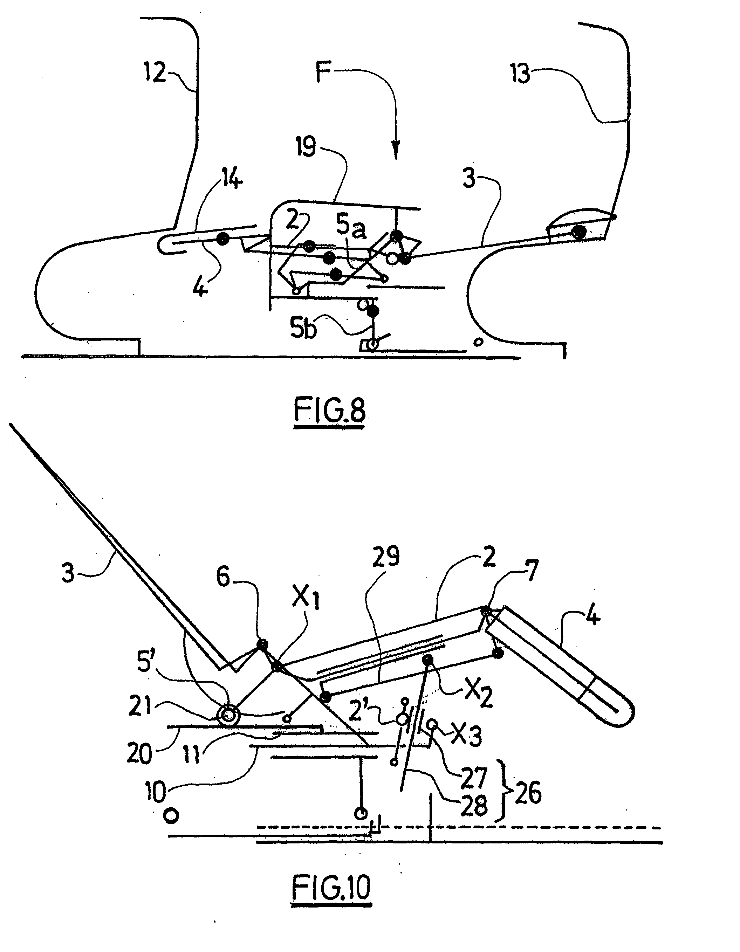

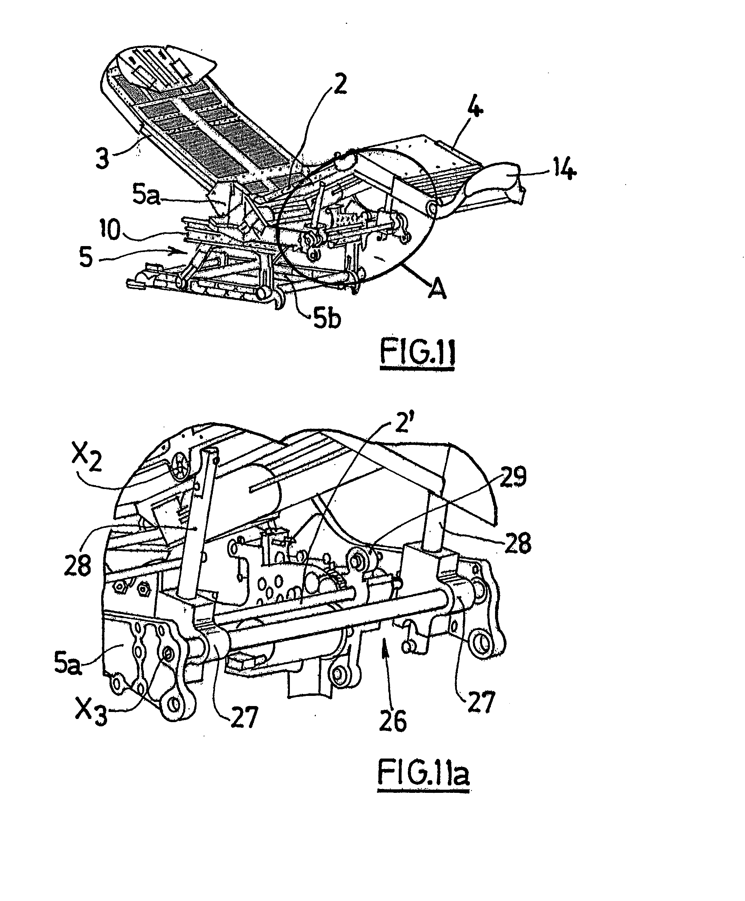

Dans le mode de réalisation représenté sur les figures 9 à 12, le mouvement du repose jambes est actionné par un vérin électrique 29 en liaison pivot avec l'assise 2 d'un côté et avec le repose jambes 4 de l'autre (figure 10).

Le dossier 3 est réglable en inclinaison par rapport à la structure de support 5 par rotation autour d'un axe 6.

Selon le mode de réalisation, la structure de support 5 ou l'assise 2 sont mobiles en translation suivant une direction sensiblement perpendiculaire au plan du dossier 3 en position verticale.

Dans le mode de réalisation décrit ci-après, seule la structure de support 5 est mobile en translation.

La structure de support 5 peut comporter deux parties : une partie inférieure 5b fixe et solidaire du sol de l'avion et une partie supérieure 5a.

Ladite partie supérieure 5a est mobile en translation par rapport à la partie inférieure 5b fixe. Cette liaison est par exemple réalisée par un système de glissières 10, 11 disposées respectivement sur la partie inférieure 5b et la partie supérieure 5a dans un plan sensiblement horizontal suivant une direction sensiblement perpendiculaire au plan du dossier 3 en position verticale.

Le système de glissière 10, 11 peut être télescopique ou non en fonction de la course du mouvement. Il est disposé de chaque côté de l'assise 2.

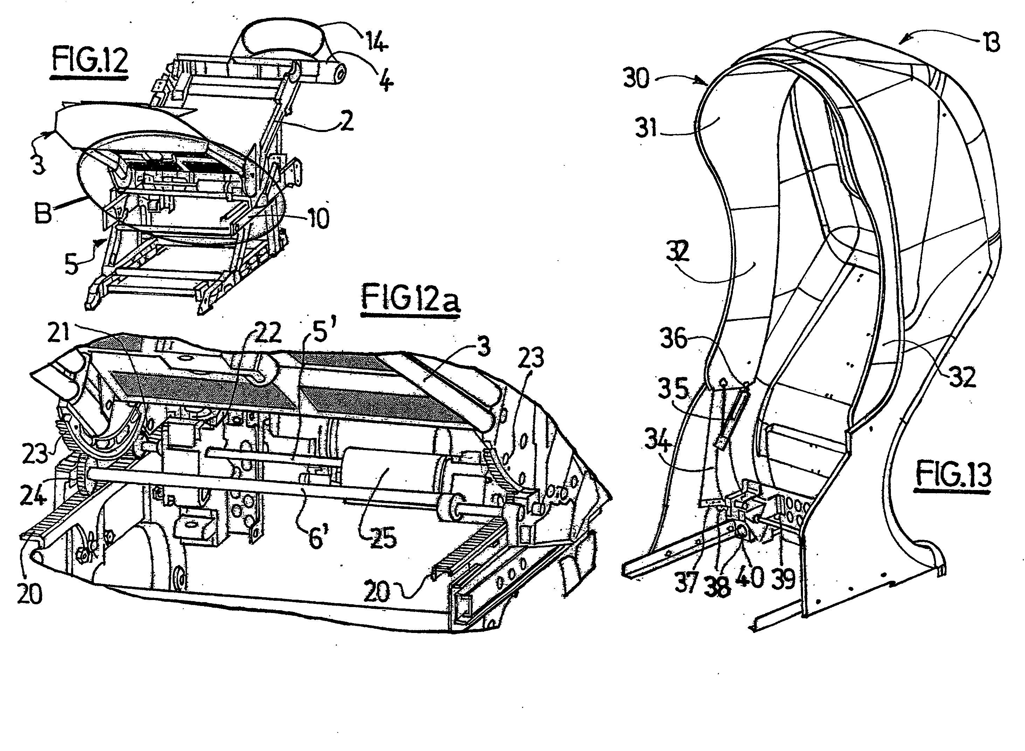

Dans le mode de réalisation représenté sur les figures 10, 12, 12a, l'actionnement du mouvement de la glissière 10, 11 est réalisé au moyen de crémaillères 20 fixées sur la partie inférieure 5b, de chaque côté de l'assise 2 et de pignons 21 disposés de chaque côté de l'assise sur un arbre 5' sensiblement horizontal monté à pivot sur la partie supérieure 5a. Les pignons 21 viennent s'engrener dans les crémaillères 20 de façon à les déplacer.

Un actionneur 22 disposé sur l'arbre 5' entraîne ce dernier en rotation et par conséquent fait tourner les pignons 21 entraînant ainsi la translation des crémaillères 20.

L'axe 6 de rotation du dossier 3 est situé de préférence sur la partie supérieure 5a de ladite structure de support 5.

Le dossier est ainsi en pivot par rapport à la partie supérieure 5a autour de l'axe 6.

Dans le mode de réalisation représenté sur les figures 12, 12a, l'actionnement de l'inclinaison du dossier 3 se fait par des engrenages comprenant un secteur de roue 23 et un pignon 24.

Un secteur de roue 23 est disposé de chaque côté du dossier et un arbre 6', sensiblement horizontal, fixé en liaison pivot sur la partie supérieure 5a porte un pignon 24 de chaque côté du dossier, chaque pignon 24 venant en prise avec un secteur de roue 23. L'arbre 6' est motorisé par un actionneur rotatif 25.

Cet actionneur rotatif 25 entraîne la rotation de l'arbre 6' et par conséquent des pignons 24. La rotation des pignons 24 entraîne alors la rotation des secteurs de roue 23 et l'inclinaison du dossier 3.

L'assise 2 est par ailleurs reliée à la partie supérieure 5a de la structure support 5. De cette manière, l'assise 2 et le dossier 3 sont déplacés en translation, solidairement de la partie supérieure 5a de la structure support 5.

Le réglage de l'inclinaison de l'assise 2 est réalisé par exemple par un système de biellettes 8, 9 articulées entre elles, l'une 8 des biellettes étant articulée à l'assise 2 et l'autre biellette 9 étant articulée à la structure de support 5, de préférence à la partie supérieure 5a de cette dernière (figure 1). Ces biellettes 8, 9 sont disposées du côté de l'assise 2 opposé au dossier 3, de sorte que ce côté peut être surélevé par rapport à l'autre côté.

Dans un autre mode de réalisation représenté sur les figures 9,10,11 et 11a le réglage de l'inclinaison de l'assise 2 est réalisé de la manière suivante :
- l'arrière de l'assise 2 est en liaison pivot avec le dossier 3 autour d'un axe X1 sensiblement parallèle à l'axe 6 et situé à distance de ce dernier. Ce déport entre les axes 6 et X1 permet lorsque le dossier 3 bascule que l'avant de l'assise 2 se relève tandis que l'arrière de l'assise 2 s'abaisse ;
- l'avant de l'assise 2 est en liaison avec la partie supérieure 5a par l'intermédiaire d'un double vérin 26. De chaque côté de l'assise, le double vérin 26 est composé d'un corps 27 en liaison pivot avec la partie supérieure 5a par un axe X3 et d'une crémaillère 28 en pivot avec l'avant de l'assise par un axe X2. La crémaillère 28 est en liaison glissière par rapport au corps 27 et elle est actionnée par un actionneur rotatif 29 par l'intermédiaire d'un arbre 2' fixé en pivot sur le corps 27. Les extrémités de l'arbre 2' comprennent chacune un pignon en prise avec une crémaillère 28. Le déplacement de la crémaillère 28 par rapport au corps 27 permet ainsi de modifier la hauteur de l'avant de l'assise et l'inclinaison de celle-ci.

Les axes X1, X2 et X3 ainsi que l'arbre 2' s'étendent suivant une direction sensiblement horizontale.

Le siège peut par ailleurs comporter un ou deux accoudoirs 19 situés de chaque côté du siège 1 (figure 8). Ces accoudoirs peuvent être individuels et totalement indépendants des sièges environnants.

Ces accoudoirs 19 sont solidaires de la structure support 5. De préférence, ils sont solidaires de la partie supérieure 5a de ladite structure support 5, de sorte qu'ils puissent suivre le mouvement de cette partie 5a et assurer un confort maximal au passager.

Les mouvements des différents éléments du siège 1, à savoir les mouvements de l'assise 2, du dossier 3, du repose jambes 4 sont totalement indépendants les uns des autres.

Le siège 1 peut par ailleurs comporter un repose pieds 14 mobile en translation par rapport au repose jambes 4, de sorte que la longueur totale du repose jambes 4 - repose pieds 14 peut être ajustée par le passager dans l'espace disponible. Le mouvement du repose pieds 14 est indépendant des autres mouvements du siège.

Dans d'autres modes de réalisation, d'autres éléments du siège peuvent être mobiles, tels que les accoudoirs, l'appui tête, ou encore, la longueur de l'assise 2 peut être ajustée à la taille du passager, les différents mouvements restant toujours indépendants.

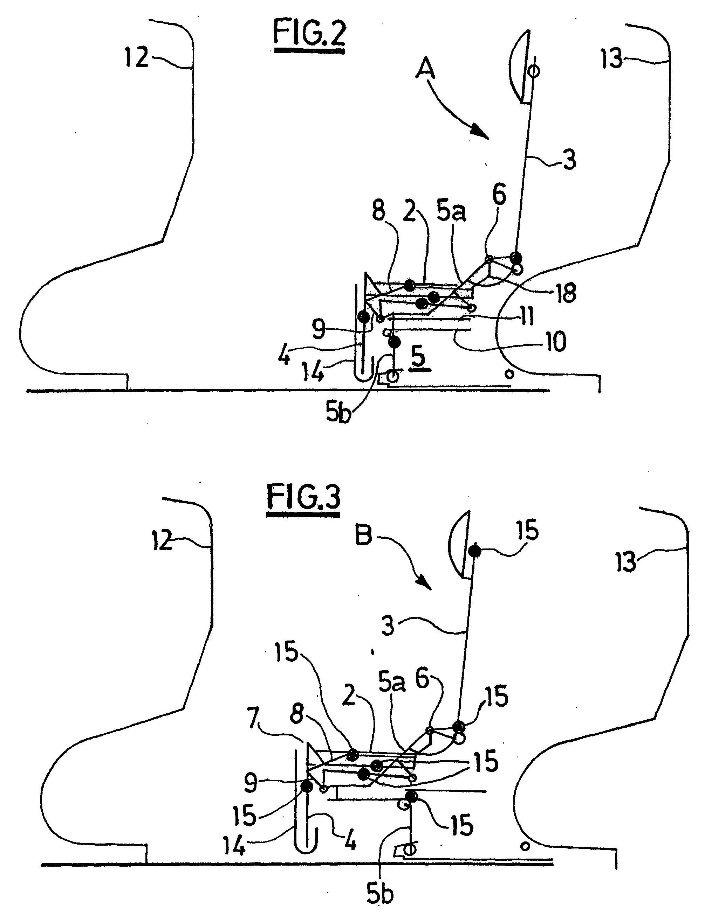

Le siège 1 est situé dans un espace compris entre une coque fixe de séparation avant 12 et une coque fixe de séparation arrière 13 représentées sur les figures 2 à 8.

Ces coques fixes de séparation 12, 13 sont fixes et solidaires du sol de l'avion. Elles délimitent ainsi un espace dans lequel le siège peut être déplacé. La distance entre deux coques fixes 12, 13 est variable selon la répartition des sièges à l'intérieur de l'avion.

Ces coques 12, 13 peuvent notamment servir de support de tablette ou d'écran vidéo pour le passager assis derrière elles.

L'assise 2, le dossier 3, le repose jambes 4 et la structure de support 5 sont complètement indépendants des coques de séparation 12, 13. Leurs mouvements sont indépendants desdites coques 12, 13.

Dans l'espace définit par deux coques de séparation 12, 13, le siège 1 comprend des moyens de commande lui permettant d'adopter, entre une position droite de décollage et d'atterrissage du siège et une position allongée du siège, toutes les positions autorisées par l'espace compris entre ladite coque fixe de séparation avant 12 et ladite coque fixe de séparation arrière 13.

Certaines de ces positions sont décrites sur les figures 2 à 8. Sur ces figures, les mêmes symboles sont représentés par les mêmes références.

La figure 2 décrit le siège 1 en position droite de décollage et d'atterrissage A. L'assise 2 est sensiblement horizontale, le dossier 3 et le repose jambes 4 étant sensiblement verticaux.

Dans cette position A, ledit siège 1 s'étend à proximité de la coque fixe de séparation arrière 13.

Quand les deux coques avant 12 et arrière 13 sont très éloignées l'une de l'autre, en position A de décollage, le passager ne peut utiliser les équipements éventuels disposés dans la coque de séparation 12 avant car celle-ci est trop éloignée.

Le siège 1 peut alors être placé dans une position droite B située à distance de ladite coque fixe de séparation arrière 13, dans laquelle l'assise 2 est sensiblement horizontale, le dossier 3 et le repose jambes 4 étant sensiblement verticaux. Cette position B est représentée sur la figure 3.

Le siège est alors proche de la coque fixe de séparation avant 12 et le passager peut utiliser les équipements disposés sur cette dernière.

Dans un mode de réalisation, chaque coque fixe de séparation 13 d'un siège comprend un élément de séparation formant capote 30 permettant d'augmenter l'isolement du passager (figure 13).

Cet élément de séparation 30 se présente sous la forme d'une capote venant dans la prolongation de la partie supérieure et des côtés de la coque fixe 13.

Cet élément de séparation 30 est mobile entre une position où il est rentré à l'intérieur de la coque fixe 13 et une position où il saille de la coque fixe 13.

L'élément de séparation 30 comprend une partie supérieure formant toit 31 de faibles largeur et épaisseur, sensiblement en forme d'arc de cercle, dont chaque extrémité est prolongée par un montant 32, la forme des parties 31 et 32 épousant la forme intérieure de la coque fixe de séparation 13.

L'extrémité inférieure 33 de chaque montant 32 est reliée d'une part à l'extrémité d'un levier 34 par une liaison fixe du côté du montant situé vers l'avant de la coque fixe 13, et d'autre part à l'extrémité d'une biellette 35 par une liaison pivot 36 du côté du montant situé vers l'arrière de la coque fixe 13.

L'autre extrémité du levier 34 comprend une crémaillère 37.

L'autre extrémité de la biellette 35 est reliée au levier 34 par une liaison pivot située sensiblement à mi-hauteur du levier.

Un secteur de roue 37 de chaque levier 34 vient s'engrener sur un pignon 38 d'un arbre 39.

L'arbre 39, sensiblement horizontal, est disposé dans la partie inférieure de la coque fixe 13. Il est entraîné en rotation par un actionneur 40.

Ainsi, les pignons 38 entraînés en rotation par l'arbre 39, entraînent à leur tour le déplacement des secteurs de roue 37 provoquant le basculement des leviers 34 et la sortie ou la rentrée de l'élément de séparation 30 de la coque fixe 13.

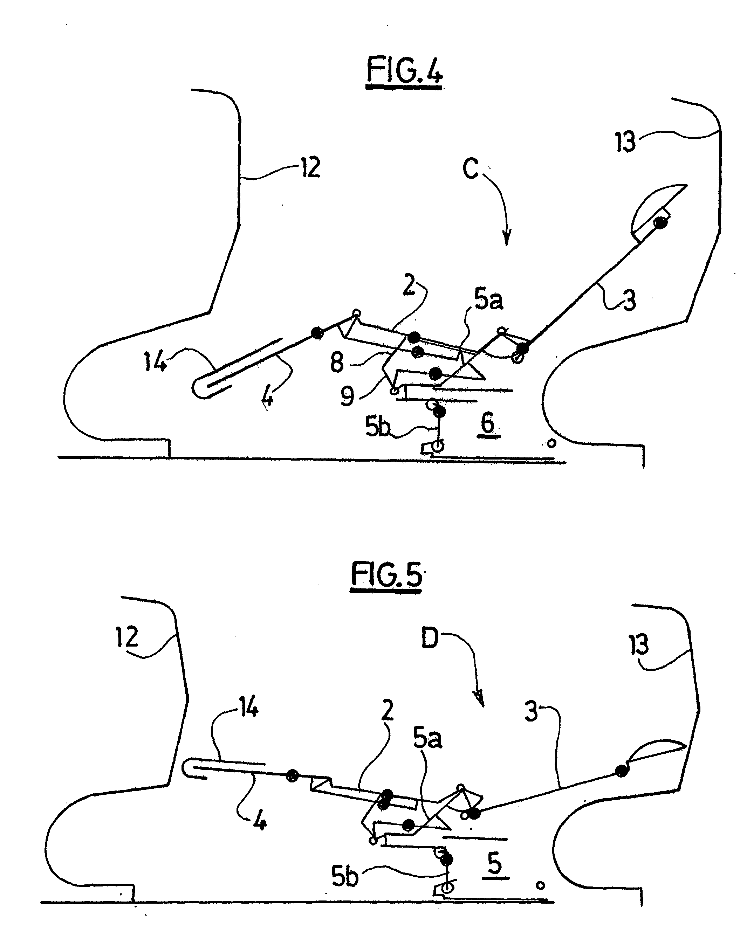

Les figures 1 et 4 représentent le siège 1 dans une position de confort C dans laquelle le dossier 3 est incliné vers l'arrière par rapport à la verticale, l'assise 2 est incliné par rapport à un plan horizontal, la partie de l'assise 2 distante du dossier 3 étant ainsi surélevée, et le repose jambes 4 est légèrement incliné par rapport à la verticale de sorte qu'il est incliné vers le bas par rapport à l'assise 2.

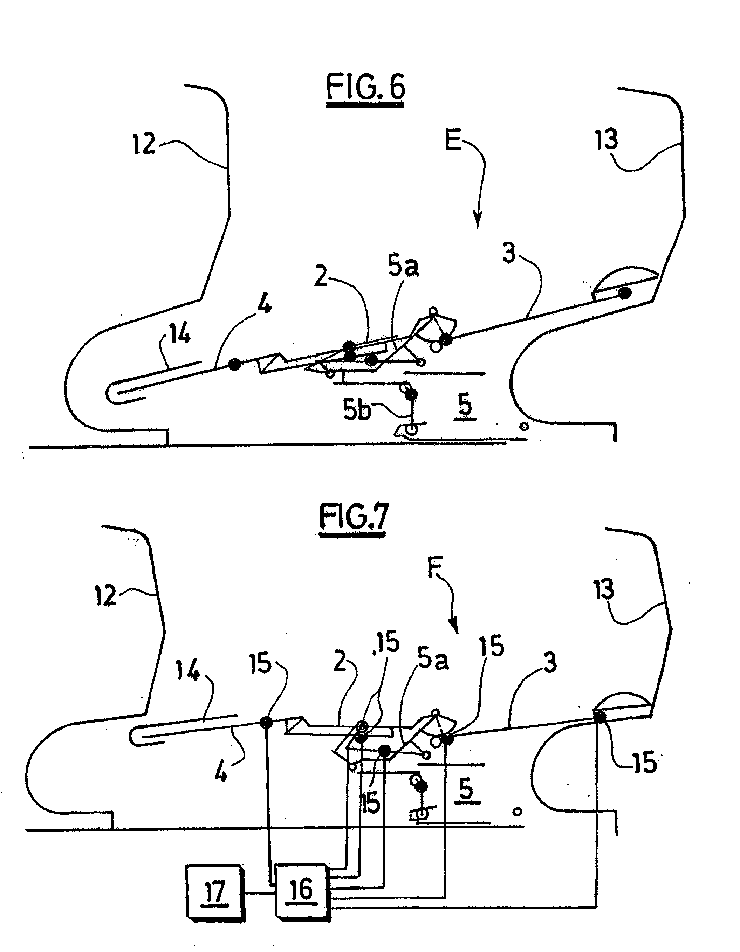

La figure 5 représente le siège 1 dans une position D sensiblement en forme de V.

Dans cette position D, le dossier 3 est incliné vers l'arrière par rapport à la verticale, l'assise 2 et le repose jambes 4 étant dans un même plan incliné vers le haut par rapport à l'horizontale. Le passager a ainsi les jambes surélevées.

La figure 6 représente le siège 1 dans une position E sensiblement allongée dans laquelle le dossier 3, l'assise 2 et le repose jambes 4 sont situés dans un même plan légèrement incliné par rapport au plan horizontal.

Les figures 7 et 8 représentent le siège 1 dans une position F complètement allongée, le dossier 3, l'assise 2 et le repose jambes 4 étant situés dans le plan horizontal.

Lorsque le siège 1 comporte un repose pieds 14, la longueur totale du siège dans la position F peut être variable.

La position F peut alors être de longueur maximale tel que représenté sur la figure 7, le repose pieds 14 étant complètement déployé. Le passager peut alors s'allonger complètement.

La position F peut également être de longueur réduite, tel que représenté sur la figure 8, le repose pieds 14 n'étant pas du tout déployé ou étant partiellement déployé. Le passager peut alors se coucher dans une position en « chien de fusil ».

En dehors de ces positions A à F, le siège 1 peut adopter toutes les positions intermédiaires ou toutes les positions présentant des variantes étant donné que les mouvements du dossier 3, de l'assise 2 et du repose jambes 4 sont indépendants.

Dans toute position du siège 1, si la distance entre les deux coques de séparation avant 12 et arrière 13 est faible, la partie supérieure 5a de la structure de support 5 est alors déplacée en translation par rapport à la partie inférieure 5b de la structure de support 5 afin d'éviter que le dossier 3 et/ou le repose jambes 4 entrent en contact avec l'une des deux coques de séparation 12, 13.

Si cette distance entre les deux coques de séparation avant 12 et arrière 13 est trop faible, il peut arriver que la position F complètement allongée avec le repose pieds 14 complètement déployé soit impossible. Le passager peut alors mettre le siège 1 en position E allongée inclinée ou alors réduire la longueur du repose pieds 14.

L'extension du repose pieds 14 peut également être ajusté dans toute position du siège.

Afin de passer d'une position à une autre, le siège 1 comprend des moyens de commande.

Ces moyens de commande comprennent des moteurs 15 indépendants, le mouvement de chaque élément 2, 3, 4, 13 du siège étant commandé par au moins un desdits moteurs 15.

On peut également prévoir que les mouvements du repose pieds 14 et/ou de l'appui tête et/ou éventuellement d'autres éléments mobiles du siège soient commandés par au moins un desdits moteurs 15.

On peut notamment prévoir que les moyens de commande comprennent un boîtier de commande électronique 16 coopérant avec lesdits moteurs 15 et coopérant en outre avec des moyens 17 pouvant être actionnés par l'utilisateur pour régler la position du siège (figure 7).

Lesdits moteurs 15 peuvent être les actionneurs 22, 25, 29, 40 décrits plus haut.

Ce boîtier de commande électronique 16 peut être programmable.

Ces moyens 17 sont par exemple une série de boutons ou de manettes de commande permettant de commander le déplacement des différents éléments mobiles du siège 1.

Lorsque la distance entre deux coques de séparation 12, 13 varie d'une installation des sièges à une autre, les limitations pour éviter les interférences avec l'environnement du siège se font uniquement par des restrictions sur la motorisation, les moyens de commande restant identiques.

On peut ainsi définir une enveloppe délimitant les déplacements du siège autorisés par les restrictions sur la motorisation. Cette enveloppe est définie par au moins deux points extrêmes du siège 1, tels que l'extrémité du repose jambes 4 ou du repose pieds 14 quand il est présent et l'extrémité de l'appui tête.

Les restrictions sur la motorisation sont telles que l'enveloppe n'interfère pas avec l'environnement du siège tel que les coques de séparation 12, 13 et éventuellement le sol de l'avion afin d'éviter d'endommager le repose jambes 4 ou le repose pieds 14.

L'ajustement des déplacements extrêmes des différents éléments mobiles du siège 2, 3, 4, 14 en fonction de la forme et/ou de la distance entre les deux coques de séparation 12, 13 se fait par simple réglage du boîtier de commande 16 et/ou des moteurs 15, sans modifications d'éléments de la structure du siège ou de la cinématique.

Ces moteurs sont par exemple chacun asservis avec une recopie de position à un boîtier de commande programmable 16. En modifiant la programmation de ces boîtiers 16, on fait varier l'enveloppe des déplacements autorisés du siège en fonction de la forme et/ou de la position relative des coques de séparation 12, 13.

Il est également possible de placer des butées pour limiter les différents mouvements. D'autres moyens équivalents peuvent également être utiliser pour limiter les mouvements.

Les sièges peuvent ainsi être facilement transposés d'une installation à une autre sans modifications importantes.

L'invention ne se limite pas au mode de réalisation décrit. On peut notamment envisager que le dossier 3 soit relié à l'assise 2, cette dernière étant reliée à la structure de support 5.

Lorsque le siège selon l'invention comprend deux accoudoirs 19, et que ces derniers sont individuels, le siège forme alors une unité complètement indépendante des sièges environnants, les différentes places étant indépendantes.

Le siège selon l'invention peut notamment être utilisé dans d'autres véhicules de transport aériens, terrestres ou maritimes sans sortir du cadre de l'invention.

## Revendications

1. Siège (1) pour avion comprenant une assise (2) réglable en inclinaison, un dossier (3) réglable en inclinaison, un repose jambes (4) réglable en inclinaison, une structure de support (5) de l'assise (2) et du dossier (3) et une coque fixe de séparation (13) disposé derrière le dossier (3) du siège, ladite structure de support (5) ou l'assise (2) étant mobile en translation suivant une direction sensiblement perpendiculaire du dossier (3) en position verticale, ledit siège (1) étant situé dans un espace compris entre une coque fixe de séparation avant (12) et une coque fixe de séparation arrière (13), ledit siège s'étendant à proximité de la coque fixe de séparation arrière (13) en position droite (A) de décollage et d'atterrissage dans laquelle l'assise (2) est sensiblement horizontale, le dossier (3) et le repose jambes (4) étant sensiblement verticaux, **caractérisé en ce que** les mouvements de chacun des éléments (2, 3, 4) du siège sont indépendants les uns des autres et des coques fixes de séparation (12, 13) et **en ce qu'**il comprend des moyens de commande lui permettant d'adopter, entre ladite position droite (A) de décollage et d'atterrissage du siège et une position allongée (E, F) du siège, toutes les positions autorisées par l'espace compris entre ladite coque fixe de séparation avant (12) et ladite coque fixe de séparation arrière (13).

2. Siège selon la revendication 1, **caractérisé en ce qu'**il peut adopter une position droite (B) située à distance de ladite coque fixe de séparation arrière (13), dans laquelle l'assise (2) est sensiblement horizontale, le dossier (3) et le repose jambes (4) étant sensiblement verticaux.

3. Siège selon la revendication 1 ou 2, **caractérisé en ce qu'**il peut adopter une position (D) sensiblement en forme de V, le dossier (3) étant incliné vers l'arrière par rapport à la verticale, l'assise (2) et le repose jambes (4) étant dans un même plan incliné vers le haut par rapport à l'horizontale.

4. Siège selon l'une des revendications 1 à 3, **caractérisé en ce qu'**il peut adopter une position (C) dans laquelle le dossier (3) est incliné vers l'arrière par rapport à la verticale, l'assise (2) est inclinée par rapport à l'horizontale, et le repose jambes (4) est incliné vers le bas par rapport à l'assise (2).

5. Siège selon l'une des revendications 1 à 4, **caractérisé en ce qu'**il peut adopter une position (F) complètement allongée, le dossier (3), l'assise (2) et le repose jambes (4) étant situés dans le plan horizontal.

6. Siège selon l'une des revendications 1 à 5, **caractérisé en ce qu'**il peut adopter une position sensiblement allongée (E) dans laquelle le dossier (3), l'assise (2) et le repose jambes (4) sont situés dans un même plan légèrement incliné par rapport au plan horizontal.

7. Siège selon l'une des revendications 1 à 6, **caractérisé en ce que** la structure de support (5) de l'assise (2) comporte une partie inférieure (5b) fixe et solidaire du sol de l'avion, et une partie supérieure (5b) mobile en translation par rapport à ladite partie inférieure (5b) au moyen de glissières (10, 11) sensiblement horizontales.

8. Siège selon la revendication 7, **caractérisé en ce qu'**il comprend :
- des crémaillères (20) fixées sur la partie inférieure (5b) de chaque côté de l'assise (2) ;
- des pignons (21) disposés de chaque côté de l'assise sur un arbre (5') monté à pivot sur la partie supérieure (5a) destinés à s'engrener avec les crémaillère (20) ;
- Un actionneur (22) disposé sur l'arbre (5') ;
l'actionneur (22) entraînant l'arbre (5') et les pignons (21) en rotation, les pignons (21) entraînant les des crémaillères (20) en translation.

9. Siège selon l'une des revendications 1 à 8, **caractérisé en ce qu'**il comprend :
- Un secteur de roue (23) disposé de chaque côté du dossier (3) ;
- un arbre (6') sensiblement horizontal fixé en liaison pivot sur la partie supérieure (5a) de l'assise et portant un pignon (24) de chaque côté du dossier (3) ;
- un actionneur rotatif (25) ;
chaque pignon (24) venant en prise avec une roue (23), l'actionneur (25) entraînant en rotation l'arbre (6'), les pignons (24) et les secteurs de roue (23).

10. Siège selon l'une des revendications 1 à 9, **caractérisé en ce qu'**il comprend :
- un axe (X1) sensiblement parallèle à l'axe (6) et à distance de ce dernier servant de liaison pivot entre l'arrière de l'assise (2) et le dossier (3) ;
- un double vérin (26) reliant la partie supérieure (5a) de l'assise et l'avant de l'assise (2) ; le double vérin (26) comprenant de chaque côté de l'assise (2) un corps (27) en liaison pivot avec la partie supérieure (5a) par un axe (X3) sensiblement horizontal et une crémaillère (28) en liaison pivot avec l'avant de l'assise par un axe (X2) sensiblement horizontal,
- un actionneur rotatif (29) comprenant un arbre (2') sensiblement horizontal fixé en liaison pivot sur le corps (27), les extrémités de l'arbre (2') comprenant chacune un pignon en prise avec une crémaillère (28) ;
l'actionneur rotatif (29) entraînant la rotation de l'arbre (2') et entraînant la translation de la crémaillère (28) de sorte que le déplacement de la crémaillère (28) par rapport au corps (27) permet de modifier la hauteur de l'avant de l'assise (2) et l'inclinaison de celle-ci.

11. Siège selon l'une des revendications 1 à 10, **caractérisé en ce qu'**il comprend deux accoudoirs individuels (19).

12. Siège selon la revendication 11 lorsqu'elle dépend de la revendication 7, **caractérisé en ce que** les deux accoudoirs (19) sont solidaires de la partie supérieure (5a) de la structure support (5).

13. Siège selon l'une des revendications 1 à 12, **caractérisé en ce qu'**il comporte un repose pieds (14) mobile en translation par rapport au repose jambes (4).

14. Siège selon la revendication 13 lorsqu'elle dépend de la revendication 5, **caractérisé en ce que** la longueur totale du siège en position F est variable en fonction de l'extension du repose pieds (14).

15. Siège selon l'une des revendications 1 à 14, **caractérisé en ce que** la coque fixe de séparation (13) dudit siège comprend un élément de séparation formant capote (30) venant dans la prolongation de la partie supérieure et des côtés de ladite coque fixe (13), mobile entre une position où il est rentré à l'intérieur de la coque fixe (13) et une position où il saille de celle-ci.

16. Siège selon la revendication 15, **caractérisé en ce que** l'élément de séparation (30) comprend des montants (32) dont les extrémités inférieures (33) sont chacune reliées d'une part à l'extrémité d'un levier (34) par une liaison fixe du côté du montant (32) situé vers l'avant de la coque fixe (13), et d'autre part à l'extrémité d'une biellette (35) par une liaison pivot (36) du côté du montant situé vers l'arrière de la coque fixe (13), l'autre extrémité du levier (34) comprenant un secteur de roue (37) s'engrenant sur un pignon (38) d'un arbre (39), l'arbre (39) étant entraîné en rotation par un actionneur (40).

17. Siège selon l'une des revendications 1 à 16, **caractérisé en ce que** les moyens de commande permettant au siège d'adopter les différentes positions comprennent des moteurs indépendants (15), le mouvement de chaque élément (2, 3, 4) du siège étant commandé par au moins un desdits moteurs (15).

18. Siège selon l'une des revendications 13 à 17, **caractérisé en ce que** les moyens de commande comprennent un moteur (15) indépendant pour commander le mouvement du repose pieds (14).

19. Siège selon l'une des revendications 1 à 18, **caractérisé en ce qu'**il comprend est un vérin électrique (29) en liaison pivot avec l'assise (2) d'un côté et avec le repose jambes (4) de l'autre, destiné à actionner le mouvement du repose jambes.

20. Siège selon les revendications 17 ou 19, **caractérisé en ce que** les moyens de commande comprennent un boîtier de commande électronique (16) coopérant avec lesdits moteurs (15) et coopérant en outre avec des moyens (17) pouvant être actionnés par l'utilisateur pour régler la position du siège (1).

21. Siège selon la revendication 20, **caractérisé en ce que** l'ajustement des déplacements des différents éléments (2, 3, 4, 14) mobiles du siège en fonction de la distance entre les deux coques de séparation (12, 13) est réalisé par réglage du boîtier de commande (16) et/ou des moteurs (15).

## Patentansprüche

1. Flugzeugsitz (1), bestehend aus einer neigungsverstellbaren Sitzfläche (2), einer neigungsverstellbaren Rückenlehne (3), einer neigungsverstellbaren Beinstütze (4), einer Stützstruktur (5) der Sitzfläche (2) und der Rückenlehne (3) und einer festen Trennschale (13), welche hinter der Rückenlehne (3) des Sitzes angebracht ist, wobei genannte Stützstruktur (5) oder Sitzfläche (2) parallelverschiebbar ist in eine Richtung, welche im wesentlichen senkrecht zur Rückenlehne (3) verläuft, wenn sich diese in aufrechter Position befindet, wobei der genannte Sitz (1) im Raum zwischen der vorderen festen Trennschale (12) und der hinteren festen Trennschale (13) untergebracht ist, wobei sich genannter Sitz etwa bis zur hinteren Trennschale (13) erstreckt, wenn er sich in aufrechter Start- oder Landeposition (A) befindet und die Sitzfläche (2) im wesentlichen waagerecht, und die Rückenlehne (3) sowie die Beinstütze (4) im wesentlichen senkrecht gestellt sind, **dadurch gekennzeichnet, dass** die Bewegungen eines jeden der Elemente (2, 3, 4) des Sitzes voneinander unabhängig sowie von den Trennschalen (12, 13) unabhängig sind, und dadurch, dass er Mittel zur Steuerung umfasst, welche es ermöglichen, dass zwischen der genannten aufrechten Start- und Landeposition (A) des Sitzes und einer ausgestreckten Position (E, F) des Sitzes jede Position eingenommen werden kann, welche sich im Rahmen zwischen der vorderen festen Trennschale (12) und der hinteren festen Trennschale (13) bewegt.

2. Sitz nach Anspruch 1, **dadurch gekennzeichnet, dass** er eine aufrechte Position (B) in Abstand zur hinteren festen Trennschale (13) einnehmen kann, wobei die Sitzfläche (2) im wesentlichen waagerecht gestellt ist, und die Rückenlehne (3) sowie die Beinstütze (4) im wesentlichen senkrecht gestellt sind.

3. Sitz nach Anspruch 1 oder 2, **dadurch gekennzeichnet, dass** er eine im wesentlichen V-förmige Position (D) einnehmen kann, wobei die Rückenlehne (3) im Bezug zur Vertikalen nach hinten geneigt ist, und die Sitzfläche (2) sowie die Beinstütze (4) sich in einer Linie befinden und im Bezug zur Horizontalen nach oben geneigt sind.

4. Sitz nach einem der Ansprüche 1 bis 3, **dadurch gekennzeichnet, dass** er eine Position (C) einnehmen kann,
wobei die Rückenlehne (3) im Bezug zur Vertikalen nach hinten geneigt ist, die Sitzfläche im Bezug zur Horizontalen geneigt ist, und die Beinstütze (4) im Bezug zur Sitzfläche (2) nach unten geneigt ist.

5. Sitz nach einem der Ansprüche 1 bis 4, **dadurch gekennzeichnet, dass** er eine völlig ausgestreckte Position (F) einnehmen kann, wobei sich die Rückenlehne (3), die Sitzfläche (2) und die Beinstütze (4) in einer waagerechten Ebene befinden.

6. Sitz nach einem der Ansprüche 1 bis 5, **dadurch gekennzeichnet, dass** er eine im wesentlichen ausgestreckte Position (E) einnehmen kann, wobei sich die Rückenlehne (3), die Sitzfläche (2) und die Beinstütze (4) in einer Ebene befinden, welche im Bezug zur Waagerechten leicht geneigt ist.

7. Sitz nach einem der Ansprüche 1 bis 6, **dadurch gekennzeichnet, dass** die Stützstruktur (5) der Sitzfläche (2) einen unteren Teil (5b) umfasst, welcher unbeweglich und mit dem Flugzeugboden fest verbunden ist, sowie einen oberen Teil (5b), welcher mittels im wesentlichen waagerechter Schienen (10, 11) in Bezug zum genannten unteren Teil (5b) verschiebbar ist.

8. Sitz nach Anspruch 7, **dadurch gekennzeichnet, dass** er folgende Bestandteile umfasst:
- Zahnstangen (20), welche links und rechts an der Unterseite (5b) der Sitzfläche (2) angebracht sind;
- Ritzel (21), welche jeweils seitlich an der Sitzfläche an einer an der Oberseite (5a) drehbar montierten Achse (5') angebracht sind und in die Zahnstange (20) eingreifen;
- ein Wirkglied (2), welches an der Achse (5') angebracht ist;
wobei das Wirkglied (22) die drehbare Achse (5') sowie die sich drehenden Ritzel (21) antreibt, und wobei die Ritzel (21) die sich geradlinig verschiebbare Zahnstangen (20) antreiben.

9. Sitz nach einem der Ansprüche 1 bis 8, **dadurch gekennzeichnet, dass** er folgende Teile umfasst:
- einen Ausschnitt eines Zahnkranzes (23), welcher an jeder Seite der Rückenlehne (3) angebracht ist;
- eine im wesentlichen waagerechte Achse (6'), welche drehbar mit der Oberseite (5a) der Sitzfläche verbunden ist, und welche an den beiden Seiten der Rückenlehne (3) ein Ritzel (24) aufweist;
- ein Wirkglied (25) für die Drehbewegung;
wobei jedes Ritzel (24) in ein Zahnrad (23) eingreift, und wobei das Wirkglied (25) die drehbare Achse (6'), die Ritzel (24) sowie die Zahnkranz-Ausschnitte (23) antreibt.

10. Sitz nach einem der Ansprüche 1 bis 9, **dadurch gekennzeichnet, dass** er folgende Bestandteile umfasst:
- eine Achse (X1), welche zur Achse (6) parallel ist und welche als Drehverbindung zwischen dem hinteren Teil der Sitzfläche (2) und der Rückenlehne (3) dient;
- ein doppelter Hebezylinder (26), welcher den oberen Teil (5a) der Sitzfläche mit dem vorderen Teil der Sitzfläche (2) verbindet, wobei der doppelte Hebezylinder (26) auf jeder Seite der Sitzfläche (2) ein Mittel (27) umfasst, welches drehbar verbunden ist mit dem oberen Teil (5a), und zwar durch eine waagerechte Achse (X3) und eine Zahnstange (28), welche durch eine waagerechte Achse (X2) mit dem vorderen Teil der Sitzfläche drehbar verbunden ist;
- ein Wirkglied (29) für die Drehbewegung, bestehend aus einer waagerechten Achse (2'), welche mit dem Mittel (27) drehbar verbunden ist, wobei die Enden der Achse (2') jeweils mit einem Ritzel versehen sind, welches in eine Zahnstange (28) eingreift;
wobei das Wirkglied (29) die Drehbewegung der Achse (2') sowie die geradlinige Bewegung der Zahnstange (28) antreibt, so dass die Bewegung der Zahnstange (28) in Bezug zum Mittel (27) es ermöglicht, die Höhe des vorderen Teils der Sitzfläche (2) sowie die Neigung der Sitzfläche zu verstellen.

11. Sitz nach einem der Ansprüche 1 bis 10, **dadurch gekennzeichnet, dass** er zwei unabhängige Armstützen (19) umfasst.

12. Sitz nach Anspruch 11 in Abhängigkeit von Anspruch 7, **dadurch gekennzeichnet, dass** die beiden Armstützen (19) fest mit dem oberen Teil (5a) der Stützstruktur (5) verbunden sind.

13. Sitz nach einem der Ansprüche 1 bis 12, **dadurch gekennzeichnet, dass** er eine Fußstütze (14) umfasst, welche in Bezug zur Beinstütze (4) verschiebbar ist.

14. Sitz nach Anspruch 13 in Abhängigkeit von Anspruch 5, **dadurch gekennzeichnet, dass** die Gesamtlänge des Sitzes in Position F durch Ausziehen der Fußstütze (14) veränderbar ist.

15. Sitz nach einem der Ansprüche 1 bis 14, **dadurch gekennzeichnet, dass** die feste Trennschale (13) des genannten Sitzes ein Trennelement in Form eines Verdecks (30) als Verlängerung des oberen Teils sowie der Seiten der genannten Trennschale (13) umfasst, wobei dieses Trennelement beweglich ist zwischen den Positionen, in denen es in die feste Trennschale (13) eingeschoben oder aus dieser herausgezogen ist.

16. Sitz nach Anspruch 15, **dadurch gekennzeichnet, dass** das Trennelement (30) Seitenträger (32) umfasst, deren untere Enden (33) jeweils durch eine feste Verbindung auf Seite der Seitenträger (32) am vorderen Teil der festen Trennschale (13) zum einen mit einem Hebel (34) verbunden sind, und zum anderen mit dem Ende einer verstellbaren Hebestange (35) verbunden sind durch eine drehbare Verbindung (36) auf Seite der Seitenträger am hinteren Teil der festen Trennschale (13), wobei das zweite Ende des Hebels (34) einen Zahnkranz-Sektor (37) umfasst, welcher in ein Ritzel (38) einer Achse (39) eingreift, wobei die Achse (39) durch ein Wirkglied (40) in eine Drehbewegung versetzt wird.

17. Sitz nach einem der Ansprüche 1 bis 16, **dadurch gekennzeichnet, dass** die Steuereinheiten, welche die unterschiedlichen Positionen des Sitzes ermöglichen, voneinander unabhängige Motoren (15) umfassen, wobei die Bewegung eines jeden Elementes (2, 3, 4) des Sitzes durch wenigstens einen der genannten Motoren (15) gesteuert wird.

18. Sitz nach einem der Ansprüche 13 bis 17, **dadurch gekennzeichnet, dass** die Steuereinheiten einen unabhängigen Motor (15) umfassen, welcher die Bewegung der Beinstütze (14) steuert.

19. Sitz nach einem der Ansprüche 1 bis 18, **dadurch gekennzeichnet, dass** er einen elektrischen Hebezylinder (29) umfasst, welcher drehbar verbunden ist zum einen mit der Sitzfläche (2), und zum anderen mit der Beinstütze (4), und welcher dafür vorgesehen ist, die Bewegung der Beinstütze zu steuern.

20. Sitz nach einem der Ansprüche 17 bis 19, **dadurch gekennzeichnet, dass** die Steuereinheiten ein elektronisches Bediengerät (16) umfassen, welches mit den genannten Motoren (15) zusammenwirkt und welches außerdem mit Mitteln (17) zusammenwirkt, die durch den Benutzer gesteuert werden können, um die Position des Sitzes (1) einzustellen.

21. Sitz nach Anspruch 20, **dadurch gekennzeichnet, dass** die Einstellung der Bewegungen der verschiedenen beweglichen Elemente (2, 3, 4, 14) des Sitzes in Abhängigkeit vom Abstand zwischen den beiden Trennschalen (12, 13) vorgenommen wird durch Einstellung des Bediengerätes (16) und/oder der Motoren (15).

## Claims

1. A seat (1) for an aircraft comprising a squab (2) adjustable for inclination, a back rest (3) adjustable for inclination, a leg rest (4) adjustable for inclination, a support structure (5) for the squab (2) and back rest (3) and a fixed separation shell (13) disposed behind the back rest (3) of the seat, the said support structure (5) or the squab (2) being able to move in translation in a direction substantially perpendicular to the back rest (3) in the vertical position, the said seat (1) being situated in a space between a fixed front separation shell (12) and a fixed rear separation shell (13), the said seat extending close to the fixed rear separation shell (13) in the upright takeoff and landing position (A) in which the squab (2) is substantially horizontal, the back rest (3) and the leg rest (4) being substantially vertical, **characterised in that** the movements of each of the components (2, 3, 4) of the seat are independent of each other and the fixed separation shells (12, 13) and **in that** it comprises control means enabling it to adopt, between the said upright takeoff and landing position (A) of the seat and an elongated position (E, F) of the seat, all the positions allowed by the space between the said fixed front separation shell (12) and the said fixed rear separation shell (13).

2. A seat according to Claim 1, **characterised in that** it can adopt an upright position (B) situated at a distance from the said fixed rear separation shell (13), in which the squab (2) is substantially horizontal, the back rest (3) and the leg rest (4) being substantially vertical.

3. A seat according to Claim 1 or 2, **characterised in that** it can adopt a position (D) substantially in a V shape, the back rest (3) being inclined towards the rear with respect to the vertical, the squab (2) and the leg rest (4) being in the same plane inclined upwards with respect to the horizontal.

4. A seat according to one of Claims 1 to 3, **characterised in that** it can adopt a position (C) in which the back rest (3) is inclined towards the rear with respect to the vertical, the squab (2) is inclined with respect to the horizontal, and the leg rest (4) is inclined downwards with respect to the squab (2).

5. A seat according to one of Claims 1 to 4, **characterised in that** it can adopt a completely elongated position (F), the back rest (3), the squab (2) and the leg rest (4) being situated in the horizontal plane.

6. A seat according to one of Claims 1 to 5, **characterised in that** it can adopt a substantially elongated position (E) in which the back rest (3), the squab (2) and the leg rest (4) are situated in the same plane slightly inclined with respect to the horizontal plane.

7. A seat according to one of Claims 1 to 6, **characterised in that** the support structure (5) for the squab (2) has a bottom part (5b) fixed and secured to the floor of the aircraft, and a top part (5b) able to move in translation with respect to the said bottom part (5b) by means of substantially horizontal runners (10, 11).

8. A seat according to Claim 7, **characterised in that** it comprises:
- racks (20) fixed to the bottom part (5b) of each side of the squab (2);
- pinions (21) disposed on each side of the squab on a shaft (5') pivotally mounted on the top part (5a), intended to mesh with the racks (20);
- an actuator (22) disposed on the shaft (5');
the actuator (22) driving the shaft (5') and the pinions (21) in rotation, the pinions (21) driving the racks (20) in translation.

9. A seat according to one of Claims 1 to 8, **characterised in that** it comprises:
- a wheel sector (23) disposed on each side of the back rest (3);
- a substantially horizontal shaft (6') fixed in pivot connection to the top part (5a) of the squab and carrying a pinion (24) on each side of the back rest (3);
- a rotary actuator (25);
each pinion (24) coming into engagement with a wheel (23), the actuator (25) driving in rotation the shaft (6'), the pinions (24) and the wheel sectors (23).

10. A seat according to one of Claims 1 to 9, **characterised in that** it comprises:
- a spindle (X1) substantially parallel to the spindle (6) and at a distance from the latter, serving as a pivot connection between the rear of the squab (2) and the back rest (3) ;
- a double jack (26) connecting the top part (5a) of the squab and the front of the squab (2); the double jack (26) comprising on each side of the squab (2) a body (27) in pivot connection with the top part (5a) through a substantially horizontal spindle (X3) and a rack (28) in pivot connection with the front of the squab through a substantially horizontal spindle (X2),
- a rotary actuator (29) comprising a substantially horizontal shaft (2') fixed in pivot connection to the body (27), the ends of the shaft (2') each comprising a pinion in engagement with a rack (28);
the rotary actuator (29) driving the rotation of the shaft (2') and driving the translation of the rack (28) so that the movement of the rack (28) with respect to the body (27) makes it possible to modify the height of the front of the squab (2) and the inclination thereof.

11. A seat according to one of Claims 1 to 10, **characterised in that** it comprises two individual arm rests (19).

12. A seat according to Claim 11 when it depends on Claim 7, **characterised in that** the two arm rests (19) are secured to the top part (5a) of the support structure (5).

13. A seat according to one of Claims 1 to 12, **characterised in that** it comprises a foot rest (14) able to move in translation with respect to the leg rest (4).

14. A seat according to Claim 13 when it depends on Claim 5, **characterised in that** the total length of the seat in position F is variable according to the extension of the foot rest (14).

15. A seat according to one of Claims 1 to 14, **characterised in that** the fixed separation shell (13) of the said seat comprises a separation element forming a cover (30) lying in line with the top part and the sides of the said fixed shell (13), able to move between a position in which it is retracted inside the fixed shell (13) and a position in which it projects therefrom.

16. A seat according to Claim 15, **characterised in that** the separation element (30) comprises uprights (32), the bottom ends (33) of which are each connected on the one hand to the end of the lever (34) by a fixed connection on the side of the upright (32) situated towards the front of the fixed shell (13), and on the other hand to the end of a linkage (35) by means of a pivot connection (36) on the side of the upright situated towards the rear of the fixed shell (13), the other end of the lever (34) comprising a wheel sector (37) meshing on a pinion (38) of a shaft (39), the shaft (39) being driven in rotation by an actuator (40).

17. A seat according to one of Claims 1 to 16, **characterised in that** the control means enabling the seat to adopt the various positions comprise independent motors (15), the movement of each element (2, 3, 4) of the seat being controlled by at least one of the said motors (15).

18. A seat according to one of Claims 13 to 17, **characterised in that** the control means comprise an independent motor (15) for controlling the movement of the foot rest (14).

19. A seat according to one of Claims 1 to 18, **characterised in that** it comprises an electric jack (29) in pivot connection with the squab (2) on the one hand and with the leg rest (4) on the other, intended to actuate the movement of the leg rest.

20. A seat according to Claims 17 or 19, **characterised in that** the control means comprise an electronic control box (16) cooperating with the said motors (15) and also cooperating with means (17) able to be actuated by the user in order to adjust the position of the seat (1).

21. A seat according to Claim 20, **characterised in that** the adjustment of the movements of the various movable elements (2, 3, 4, 14) of the seat according to the distance between the two separation shells (12, 13) is achieved by adjusting the control box (16) and/or the motors (15).
